# EUROPÄISCHE PATENTANMELDUNG

(11) **EP 3 537 240 A1**
(43) Veröffentlichungstag der Anmeldung: **11.09.2019**
(21) Anmeldenummer: 18160847.2
(22) Anmeldetag: 09.03.2018
(51) Int. Cl.: G05B 19/042

(54) **VEREINFACHTE PARAMETRIERUNG EINER ANTRIEBSSTEUERUNG**

(71) Anmelder: Siemens Aktiengesellschaft, 80333 München (DE)
(72) Erfinder: Krause-Leipoldt, Tammo, 91083 Baiersdorf (DE); Wegmann, Harald, 91074 Herzogenaurach (DE)

(57) **Zusammenfassung**

Ein elektrischer Antrieb (1) umfasst ein Leistungsteil (2) und eine über das Leistungsteil (2) mit elektrischer Energie versorgte elektrische Maschine (3). Eine Antriebssteuerung (5) zum Steuern des elektrischen Antriebs (1) ruft bei Vorliegen einer Startbedingung über eine Rechner-Rechner-Schnittstelle (10) aus einem Datenpool (11) einen projektierungsspezifischen Parametersatz (PS) ab, parametriert sich entsprechend dem abgerufenen Parametersatz (PS) und steuert sodann das Leistungsteil (2) in Abhängigkeit von der Antriebssteuerung (5) vorgegebenen Soll-Ansteuerzuständen (A*) unter Berücksichtigung ihrer Parametrierung an.

## Beschreibung

Die vorliegende Erfindung geht aus von einem Betriebsverfahren für eine Antriebssteuerung zum Steuern eines elektrischen Antriebs, der ein Leistungsteil und eine über das Leistungsteil mit elektrischer Energie versorgte elektrische Maschine umfasst, wobei die Antriebssteuerung das Leistungsteil in Abhängigkeit von der Antriebssteuerung vorgegebenen Soll-Ansteuerzuständen unter Berücksichtigung einer durch einen Parametersatz bestimmten Parametrierung ansteuert.

Die vorliegende Erfindung geht weiterhin aus von einem Steuerprogramm für eine Antriebssteuerung zum Steuern eines elektrischen Antriebs, der ein Leistungsteil und eine über das Leistungsteil mit elektrischer Energie versorgte elektrische Maschine umfasst, wobei das Steuerprogramm Maschinencode umfasst, der von der Antriebssteuerung abarbeitbar ist, wobei die Abarbeitung des Maschinencodes durch die Antriebssteuerung bewirkt, dass die Antriebssteuerung ein derartiges Betriebsverfahren ausführt.

Die vorliegende Erfindung geht weiterhin aus von einer Antriebssteuerung für einen elektrischen Antrieb, der ein Leistungsteil und eine über das Leistungsteil mit elektrischer Energie versorgte elektrische Maschine umfasst, wobei die Antriebssteuerung derart ausgebildet ist, dass sie im Betrieb ein derartiges Betriebsverfahren ausführt, insbesondere mit einem derartigen Steuerprogramm programmiert ist.

Die vorliegende Erfindung geht weiterhin aus von einem elektrischen Antrieb,
- wobei der elektrische Antrieb ein Leistungsteil und eine über das Leistungsteil mit elektrischer Energie versorgte elektrische Maschine umfasst,
- wobei der elektrische Antrieb von einer derartigen Antriebssteuerung gesteuert wird.

Die Inbetriebnahme elektrischer Antriebe bzw. von deren Antriebssteuerungen ist oftmals komplex und zeitaufwändig. Ferner ist die Inbetriebnahme oftmals fehlerträchtig. Dies gilt ganz besonders bei größeren Anlagen, bei denen eine Vielzahl von elektrischen Antrieben in Betrieb genommen werden muss. Darüber hinaus ist selbst bei einer formal korrekten Inbetriebnahme die Parametrierung des elektrischen Antriebs oftmals nicht optimal und/oder muss im Laufe des Lebenszyklus des elektrischen Antriebs an eine geänderte Betriebssituation oder an verbesserte Erkenntnisse angepasst werden. Das Nachführen einer derartigen Parametrierung ist ähnlich aufwändig wie die erstmalige Inbetriebnahme. Es besteht daher ein Bedürfnis nach einer einfachen standardisierten Inbetriebnahme elektrischer Antriebe einschließlich der Möglichkeit zu einer nachträglichen Optimierung.

Im Stand der Technik ist bekannt, elektrische Antriebe (bzw. deren Antriebssteuerungen) mittels Softwarewerkzeugen vor Ort zu parametrieren. In diesem Fall müssen eine Vielzahl von Parametern anwendungsspezifisch angepasst werden. Das Anpassen der Parameter erfolgt entweder einzeln manuell oder über vorbereitete Skripte. Es ist weiterhin bekannt, dass ein Projektierer derartige Parametersätze an den Hersteller der Antriebssteuerungen übermittelt, der dann seinerseits die Antriebssteuerungen entsprechend parametriert und in bereits parametrierter Form ausliefert.

Die letztgenannte Vorgehensweise bietet zwar den Vorteil, dass der Anwender von der Inbetriebnahme und der damit verbundenen Parametrierung entlastet wird. Es muss jedoch sichergestellt werden, dass an jedem Ort einer größeren Anlage der "richtige" Antrieb mit der "richtigen" Antriebssteuerung angeordnet wird. Ferner ist auch bei dieser Vorgehensweise eine einmal vorgenommene Parametrierung nicht mehr auf einfache Weise änderbar.

Die Aufgabe der vorliegenden Erfindung besteht darin, Möglichkeiten zu schaffen, mittels derer auf einfache und zuverlässige Weise eine optimale Parametrierung der Antriebssteuerungen elektrischer Antriebe möglich ist.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 5.

Erfindungsgemäß wird ein Betriebsverfahren für eine Antriebssteuerung zum Steuern eines elektrischen Antriebs geschaffen, wobei der elektrische Antrieb ein Leistungsteil und eine über das Leistungsteil mit elektrischer Energie versorgte elektrische Maschine umfasst, wobei die Antriebssteuerung bei Vorliegen einer Startbedingung über eine Rechner-Rechner-Schnittstelle aus einem Datenpool einen projektierungsspezifischen Parametersatz abruft, sich entsprechend dem abgerufenen Parametersatz parametriert und sodann das Leistungsteil in Abhängigkeit von der Antriebssteuerung vorgegebenen Soll-Ansteuerzuständen unter Berücksichtigung ihrer Parametrierung ansteuert.

Dadurch ist es möglich, in der Antriebssteuerung lediglich eine Projektierungskennung zu hinterlegen, wobei die Projektierungskennung eine einmalig individuell vergebene Kennung - also sozusagen eine Art "Fingerabdruck" - ist, die den zugehörigen elektrischen Antrieb und die Antriebssteuerung identifiziert. Es ist daher möglich, den projektierungsspezifischen Datensatz (= Parametersatz) unter der entsprechenden Projektierungskennung in dem Datenpool zu hinterlegen und ihn, basierend auf der Projektierungskennung, in dem Datenpool aufzufinden und aus dem Datenpool abzurufen.

Das Abrufen des Parametersatzes kann durch verschiedene Startbedingungen ausgelöst werden. Beispielsweise kann die Startbedingung dadurch erfüllt werden, dass die Antriebssteuerung an ihre Energieversorgung angeschaltet wird, dass die Antriebssteuerung über die Rechner-Rechner-Schnittstelle an den Datenpool angeschlossen wird oder dass in der Antriebssteuerung noch kein Parametersatz gespeichert ist. Dementsprechend wird also der projektierungsspezifische Parametersatz durch das Anschalten der Antriebssteuerung an ihre Energieversorgung, durch das Anschließen der Antriebssteuerung an den Datenpool oder dadurch, dass die Antriebssteuerung noch nicht parametriert ist, aus dem Datenpool abgerufen.

Im einfachsten Fall ist vorab bekannt, welche elektrische Maschine von dem Leistungsteil mit elektrischer Energie versorgt wird. In diesem Fall kann der Parametersatz direkt aus dem Datenpool abgerufen werden. In anderen Fällen werden der Antriebssteuerung vor dem Abrufen des Parametersatzes Kenndaten der elektrischen Maschine bekannt. In diesem Fall kann der abgerufene Parametersatz kenndatenabhängig sein. Insbesondere können in dem Datenpool für die Antriebssteuerung mehrere Parametersätze hinterlegt sein, wobei durch die Kenndaten der elektrischen Maschine festgelegt wird, welcher dieser Parametersätze aus dem Datenpool abgerufen wird.

In einer bevorzugten Ausgestaltung des Betriebsverfahrens prüft die Antriebssteuerung von Zeit zu Zeit über die Rechner-Rechner-Schnittstelle, ob in dem Datenpool ein neuer projektierungsspezifischer Parametersatz für sie hinterlegt ist. Wenn dies der Fall sein sollte, ruft die Antriebssteuerung den neuen projektierungsspezifischen Parametersatz über die Rechner-Rechner-Schnittstelle aus dem Datenpool ab, parametriert sich entsprechend dem neu abgerufenen Parametersatz und steuert sodann das Leistungsteil in Abhängigkeit von den der Antriebssteuerung vorgegebenen Soll-Ansteuerzuständen unter Berücksichtigung ihrer neuen Parametrierung an. Durch diese Vorgehensweise ist es möglich, die Parametrierung der Antriebssteuerung automatisch aktuell zu halten und an geänderte Umstände anzupassen.

In einer weiteren bevorzugten Ausgestaltung des Betriebsverfahrens erfasst die Antriebssteuerung von Zeit zu Zeit Betriebsdaten des elektrischen Antriebs und hinterlegt sie über die Rechner-Rechner-Schnittstelle in dem Datenpool. Die Betriebsdaten können bei Bedarf - teilweise oder vollständig - die Parameter des Parametersatzes mit umfassen. Durch die Hinterlegung der Betriebsdaten ist es auf Seiten des Datenpools zum einen möglich, beispielsweise zu Dokumentationszwecken eine Historie des Betriebs der Antriebssteuerung aufzubauen. Zum anderen ist es möglich, die hinterlegten Betriebsdaten auf Seiten des Datenpools auszuwerten und dadurch beispielsweise die Grundlage für eine Optimierung des Parametersatzes zu schaffen.

Die Aufgabe wird weiterhin durch ein Steuerprogramm mit den Merkmalen des Anspruchs 6 gelöst. Erfindungsgemäß bewirkt die Abarbeitung des Steuerprogramms, dass die Antriebssteuerung ein erfindungsgemäßes Betriebsverfahren ausführt.

Die Aufgabe wird weiterhin durch eine Antriebssteuerung mit den Merkmalen des Anspruchs 7 gelöst. Erfindungsgemäß ist die Antriebssteuerung derart ausgebildet, dass sie ein erfindungsgemäßes Betriebsverfahren ausführt. Insbesondere kann die Antriebssteuerung mit einem erfindungsgemäßen Steuerprogramm programmiert sein.

Die Aufgabe wird weiterhin durch einen elektrischen Antrieb mit den Merkmalen des Anspruchs 8 gelöst. Erfindungsgemäß wird der elektrische Antrieb von einer erfindungsgemäßen Antriebssteuerung gesteuert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen elektrischen Antrieb, ein Datennetz und einen Datenpool,
- FIG 2: eine Antriebssteuerung,
- FIG 3: ein Ablaufdiagramm,
- FIG 4: ein weiteres Ablaufdiagramm und
- FIG 5: ein weiteres Ablaufdiagramm.

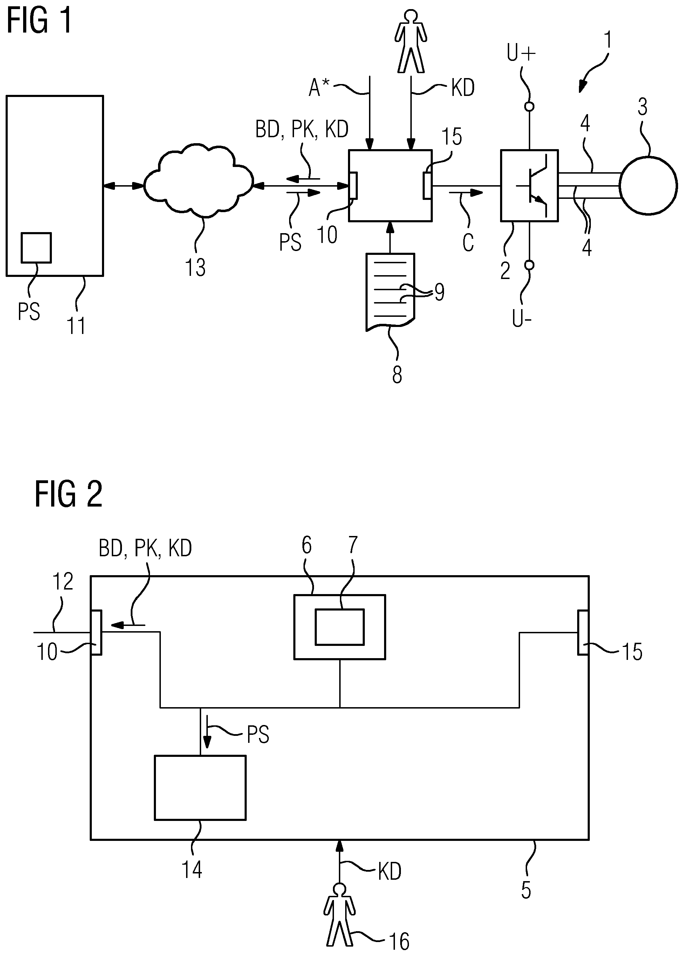

Gemäß FIG 1 weist ein elektrischer Antrieb 1 ein Leistungsteil 2 auf. Über das Leistungsteil 2 wird eine elektrische Maschine 3 des elektrischen Antriebs 1 mit elektrischer Energie versorgt. Das Leistungsteil 2 ist in der Regel als Umrichter ausgebildet. Es kann als elektronische Schaltelemente beispielsweise IGBTs aufweisen. Über die elektronischen Schaltelemente kann beispielsweise nach Bedarf ein hohes Potenzial U+ oder ein niedriges Potenzial U- an Phasen 4 der elektrischen Maschine 3 angeschaltet werden und so die elektrische Maschine 3 mit Strom versorgt werden.

Der elektrische Antrieb 1 wird von einer Antriebssteuerung 5 gesteuert. Die Antriebssteuerung 5 weist gemäß FIG 2 eine Logikeinrichtung 6 auf. Die Logikeinrichtung 6 umfasst in der Regel einen Prozessor 7. Sie kann zusätzlich auch fest programmierte Komponenten wie beispielsweise ASICs und durch Programmieren verdrahtete Komponenten wie beispielsweise FPGAs (field programmable gate array) oder PLAs (programmable logic array) umfassen.

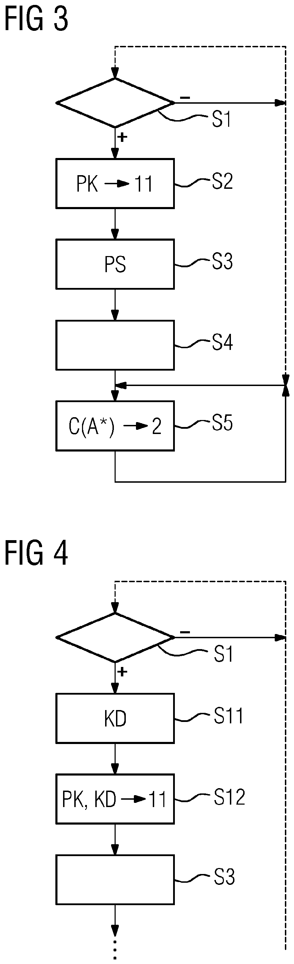

Die Antriebssteuerung 5 ist derart ausgebildet, dass sie ein Betriebsverfahren ausführt, das nachstehend in Verbindung mit FIG 3 näher erläutert wird. Die Antriebssteuerung 5 kann zu diesem Zweck insbesondere mit einem Steuerprogramm 8 programmiert sein. Das Steuerprogramm 8 umfasst in diesem Fall Maschinencode 9, der von der Antriebssteuerung 5 - genauer: von deren Logikeinrichtung 6 - abarbeitbar ist. In diesem Fall bewirkt die Abarbeitung des Maschinencodes 9 durch die Antriebssteuerung 5, dass die Antriebssteuerung 5 das entsprechende Betriebsverfahren ausführt.

Im Rahmen des Betriebsverfahrens prüft die Antriebssteuerung 5 zunächst in einem Schritt S1, ob eine Startbedingung erfüllt ist. Die Startbedingung kann beispielsweise darin bestehen, dass die Antriebssteuerung 5 an ihre Energieversorgung angeschaltet wird. In diesem Fall wird das Betriebsverfahren jedes Mal ausgeführt, wenn die Antriebssteuerung 5 aus dem energiefreien Zustand heraus wieder mit Energie versorgt wird. Alternativ oder zusätzlich ist es möglich, dass die Startbedingung darin besteht, dass die Antriebssteuerung 5 über eine Rechner-Rechner-Schnittstelle 10 (beispielsweise eine RJ45-Schnittstelle, eine WLAN-Verbindung oder eine Bluetooth-Verbindung) an einen Datenpool 11 angeschlossen wird. Hierbei kann die Antriebssteuerung 5 beispielsweise prüfen, ob ein Anschlusskabel 12 in die entsprechende Schnittstelle 10 eingesteckt wird oder ob die entsprechende leitungslose Verbindung aufgebaut werden kann. Alternativ kann die Antriebssteuerung 5 prüfen, ob über die Schnittstelle 10 und gegebenenfalls das Anschlusskabel 12 ein Anschluss an ein Rechnernetz 13 (beispielsweise das World Wide Web) besteht. Wiederum alternativ kann die Antriebssteuerung 5 prüfen, ob über die Schnittstelle 10 und das Rechnernetz 13 ein Zugriff auf den Datenpool 11 möglich ist. Alternativ oder zusätzlich ist es möglich, dass die Startbedingung darin besteht, dass in der Antriebssteuerung 5 - konkret in einem Parameterspeicher 14 der Antriebssteuerung 5 - noch kein Parametersatz gespeichert ist.

In manchen Ausgestaltungen der vorliegenden Erfindung ist es möglich, dass der Schritt S1 ausgeführt wird, bis die Startbedingung erfüllt ist bzw. vorliegt. In anderen Ausgestaltungen wird der Schritt S1 nur einmal ausgeführt. Ist die Startbedingung nicht erfüllt, wird in diesem Fall zu einem später erläuterten Schritt S5 übergegangen.

Wenn die Startbedingung erfüllt ist, geht die Antriebssteuerung 5 zu einem Schritt S2 über. Im Schritt S2 übermittelt die Antriebssteuerung 5 über die Rechner-Rechner-Schnittstelle 10 eine Projektierungskennung PK an den Datenpool 11. Die Projektierungskennung PK ist vorab von einem Projektierer in der Antriebssteuerung 5 hinterlegt worden. Innerhalb des Datenpools 11 wird anhand der Projektierungskennung PK ein zugehöriger projektierungsspezifischer Parametersatz PS ermittelt. Der Parametersatz PS ist - zusammen mit der Projektierungskennung PK - vorab von dem Projektierer in dem Datenpool 11 hinterlegt worden. Der projektierungsspezifische Parametersatz PS wird an die Antriebssteuerung 5 übermittelt und von der Antriebssteuerung 5 in einem Schritt S3 entgegengenommen. Im Ergebnis ruft die Antriebssteuerung 5 somit über die Rechner-Rechner-Schnittstelle 10 den projektierungsspezifischen Parametersatz PS ab. Insbesondere hinterlegt die Antriebssteuerung 5 den Parametersatz PS im Parameterspeicher 14. In einem Schritt S4 parametriert sich die Antriebssteuerung 5 entsprechend dem abgerufenen Parametersatz PS. Das Parametrieren als solches kann unter Umständen durch das Hinterlegen des Parametersatzes PS im Parameterspeicher 14 erfolgen. Alternativ kann es sich um einen eigenständigen, vom Hinterlegen im Parameterspeicher 14 verschiedenen Vorgang handeln.

Inhalt und Umfang des Parametersatzes PS können nach Bedarf bestimmt sein. Beispielsweise können durch den Parametersatz PS folgende Parameter festgelegt werden: Eine Solldrehzahl, eine Maximaldrehzahl, ein Maximalstrom, eine Sollspannung, eine Nennspannung, eine Maximalspannung, eine Pulsfrequenz, eine Ausgangsfrequenz sowie Hochlaufzeiten und Rücklaufzeiten für einen Hochlaufgeber, d.h. im Ergebnis eine Beschleunigungsrampe und eine Bremsrampe.

Im Schritt S5 führt die Antriebssteuerung 5 einen Normalbetrieb aus. Im Normalbetrieb nimmt die Antriebssteuerung 5 Soll-Ansteuerzustände A* entgegen, ermittelt daraus unter Berücksichtigung ihrer Parametrierung Steuerbefehle C für das Leistungsteil 2 und steuert das Leistungsteil 2 entsprechend den ermittelten Steuerbefehlen C an. Bei den Soll-Ansteuerzuständen A* kann es sich beispielsweise um Sollströme handeln.

Die Vorgehensweise von FIG 3 ist dann von Vorteil, wenn Kenndaten der elektrischen Maschine 3 bereits aus der Projektierung des elektrischen Antriebs 1 bekannt sind. Wenn dies hingegen nicht der Fall ist, kann die Vorgehensweise von FIG 3 auf verschiedene Art und Weise ausgestaltet werden.

So ist es beispielsweise möglich, dass der Antriebssteuerung 5 vor dem Abrufen des Parametersatzes PS Kenndaten KD der elektrischen Maschine 3 bekannt werden. In Einzelfällen ist es möglich, dass die Kenndaten KD der Antriebssteuerung 5 über eine Antriebsschnittstelle 15 zum Leistungsteil 2 bekannt werden. In der Regel erfolgt jedoch entsprechend der Darstellung in den FIG 1 und 2 eine Vorgabe durch eine Bedienperson 16. Beispielsweise kann die Bedienperson 16 der Antriebssteuerung 5 die Kenndaten KD manuell vorgeben. Auch ist es möglich, dass die Bedienperson 16 - beispielsweise über ein Smartphone oder ein Lesegerät - einen Code der elektrischen Maschine 3 einliest oder den Code oder ein Typenschild der elektrischen Maschine 3 fotografiert und den Code oder das Foto über eine entsprechende App an die Antriebssteuerung 5 übermittelt. In diesem Fall kann die Antriebssteuerung 5 die Kenndaten KD der elektrischen Maschine 3 durch Auswertung des eingelesenen Codes oder des übermittelten Fotos automatisch ermitteln. Soweit erforderlich, kann die Antriebssteuerung 5 weiterhin auch über eine Verbindung zum Internet weitere Informationen über die elektrische Maschine 3 anfordern. Beispielsweise können können der Code und/oder das Typenschild eine Seriennummer oder eine Typnummer mit umfassen, anhand derer die entsprechenden Informationen über die elektrische Maschine im Internet auffindbar sind.

Im Falle der Verwertung der Kenndaten KD der elektrischen Maschine 3 ist die Vorgehensweise von FIG 3 so ausgestaltet, wie dies nachstehend in Verbindung mit FIG 4 näher erläutert wird.

Gemäß FIG 4 ist der Schritt S2 durch einen Schritt S12 ersetzt. Ferner ist dem Schritt S12 ein Schritt S11 vorgeordnet. Im Schritt S11 nimmt die Antriebssteuerung 5 - direkt oder indirekt - die Kenndaten KD entgegen. Im Schritt S12 übermittelt die Antriebssteuerung 5 nicht nur die Projektierungskennung PK, sondern zusätzlich auch die Kenndaten KD an den Datenpool 11. Demzufolge ist der abgerufene Parametersatz PS - zusätzlich zu seiner Abhängigkeit von der Projektierungskennung PK - auch kenndatenabhängig.

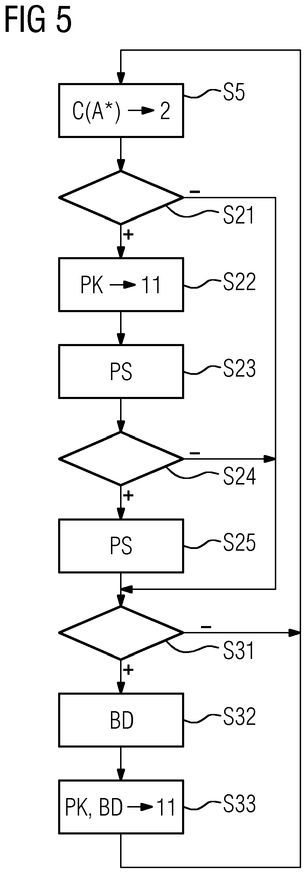

Weiterhin ist es - alternativ oder zusätzlich zu der Ausgestaltung gemäß FIG 4 - möglich, das Betriebsverfahren entsprechend der Darstellung von FIG 5 auszugestalten. FIG 5 zeigt hierbei mit den Schritten S21 bis S25 einerseits und S31 bis S33 andererseits zwei voneinander verschiedene vorteilhafte Ausgestaltungen, die nach Bedarf einzeln oder zusammen realisiert werden können.

Im Schritt S21 prüft die Antriebssteuerung 5, ob eine erste Bedingung erfüllt ist. Die erste Bedingung kann beispielsweise ein Zeitablauf sein. Unabhängig von ihrer konkreten Ausgestaltung ist die erste Bedingung jedoch nur von Zeit zu Zeit erfüllt, beispielsweise einmal am Tag oder einmal in der Woche.

Im Schritt S22 übermittelt die Antriebssteuerung 5 über die Rechner-Rechner-Schnittstelle 10 die Projektierungskennung PK und gegebenenfalls auch die Kenndaten KD an den Datenpool 11. Im Schritt S23 nimmt die Antriebssteuerung 5 den vom Datenpool 11 übermittelten Parametersatz PS entgegen. Im Schritt S24 prüft die Antriebssteuerung 5, soweit erforderlich, ob der Parametersatz PS sich gegenüber dem bereits gespeicherten Parametersatz PS geändert hat. Wenn dies der Fall ist, parametriert sich die Antriebssteuerung 5 im Schritt S25 entsprechend dem neu abgerufenen Parametersatz PS. Alternativ ist es möglich, dass der Schritt S24 entfällt und die Antriebssteuerung 5 - gegebenenfalls mit unveränderten Parametern - stets eine Neuparametrierung vornimmt.

Mit dem Schritt S25 ist die eine Ausgestaltung von FIG 5 beendet. Soweit es die eine Ausgestaltung von FIG 5 betrifft, geht die Antriebssteuerung 5 somit wieder zum Schritt S5 über. Bei der erneuten Ausführung des Schrittes S5 ermittelt die Antriebssteuerung 5 die Steuerbefehle C für das Leistungsteil 2 jedoch unter Berücksichtigung ihrer neuen Parametrierung.

Im Schritt S31 prüft die Antriebssteuerung 5, ob eine zweite Bedingung erfüllt ist. Die zweite Bedingung kann beispielsweise ein Zeitablauf sein. Unabhängig von ihrer konkreten Ausgestaltung ist die zweite Bedingung jedoch nur von Zeit zu Zeit erfüllt, beispielsweise einmal pro Minute oder einmal pro Stunde. Im Einzelfall kann die zweite Bedingung mit der ersten Bedingung identisch sein. In der Regel handelt es sich jedoch um eine eigenständige Bedingung.

Im Schritt S32 erfasst die Antriebssteuerung 5 Betriebsdaten BD des elektrischen Antriebs 1. Die erfassten Betriebsdaten BD übermittelt die Antriebssteuerung 5 im Schritt S33 über die Rechner-Rechner-Schnittstelle 10 an den Datenpool 11 und hinterlegt sie dadurch im Datenpool 11. Die Betriebsdaten BD können vollständig oder teilweise den Parametersatz PS mit umfassen.

Zusammengefasst betrifft die vorliegende Erfindung somit folgenden Sachverhalt:
Ein elektrischer Antrieb 1 umfasst ein Leistungsteil 2 und eine über das Leistungsteil 2 mit elektrischer Energie versorgte elektrische Maschine 3. Eine Antriebssteuerung 5 zum Steuern des elektrischen Antriebs 1 ruft bei Vorliegen einer Startbedingung über eine Rechner-Rechner-Schnittstelle 10 aus einem Datenpool 11 einen projektierungsspezifischen Parametersatz PS ab, parametriert sich entsprechend dem abgerufenen Parametersatz PS und steuert sodann das Leistungsteil 2 in Abhängigkeit von der Antriebssteuerung 5 vorgegebenen Soll-Ansteuerzuständen A* unter Berücksichtigung ihrer Parametrierung an.

Die vorliegende Erfindung weist viele Vorteile auf. Insbesondere ist es auf leichte, einfache und zuverlässige Weise möglich, die Antriebssteuerung 5 vor Ort korrekt zu parametrieren. Weiterhin ist es möglich, die Parametrierung der Antriebssteuerung 5 auf einfache Weise jederzeit aktuell zu halten. Schließlich stehen - beispielsweise zu Dokumentationszwecken - die historischen Betriebsdaten BD der Antriebssteuerung 5 bzw. des elektrischen Antriebs 1 (soweit erforderlich, einschließlich des jeweils gültigen Parametersatzes PS) jederzeit zur Verfügung, ohne übermäßig Speicherkapazität in der Antriebssteuerung 5 zu belegen. Schließlich ist eine zentrale - auch antriebs- und herstellerübergreifende - Auswertung der Betriebsdaten BD mit einer darauf aufbauenden Optimierung des Parametersatzes PS möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Antriebssteuerung (5) zum Steuern eines elektrischen Antriebs (1), der ein Leistungsteil (2) und eine über das Leistungsteil (2) mit elektrischer Energie versorgte elektrische Maschine (3) umfasst, wobei die Antriebssteuerung (5) bei Vorliegen einer Startbedingung über eine Rechner-Rechner-Schnittstelle (10) aus einem Datenpool (11) einen projektierungsspezifischen Parametersatz (PS) abruft, sich entsprechend dem abgerufenen Parametersatz (PS) parametriert und sodann das Leistungsteil (2) in Abhängigkeit von der Antriebssteuerung (5) vorgegebenen Soll-Ansteuerzuständen (A*) unter Berücksichtigung ihrer Parametrierung ansteuert.

2. Betriebsverfahren nach Anspruch 1,
**dadurch gekennzeichnet,**
**dass** die Startbedingung dadurch erfüllt wird, dass die Antriebssteuerung (5) an ihre Energieversorgung angeschaltet wird, dass die Antriebssteuerung (5) über die Rechner-Rechner-Schnittstelle (10) an den Datenpool (11) angeschlossen wird oder dass in der Antriebssteuerung (5) noch kein Parametersatz (PS) gespeichert ist.

3. Betriebsverfahren nach Anspruch 1 oder 2,
**dadurch gekennzeichnet,**
**dass** der Antriebssteuerung (5) vor dem Abrufen des Parametersatzes (PS) Kenndaten (KD) der elektrischen Maschine (3) bekannt werden und dass der abgerufene Parametersatz (PS) kenndatenabhängig ist.

4. Betriebsverfahren nach Anspruch 1, 2 oder 3,
**dadurch gekennzeichnet,**
**dass** die Antriebssteuerung (5) von Zeit zu Zeit über die Rechner-Rechner-Schnittstelle (10) prüft, ob in dem Datenpool (11) ein neuer projektierungsspezifischer Parametersatz (PS) für sie hinterlegt ist, und den neuen projektierungsspezifischen Parametersatz (PS) gegebenenfalls über die Rechner-Rechner-Schnittstelle (10) aus dem Datenpool (11) abruft, sich entsprechend dem neu abgerufenen Parametersatz (PS) parametriert und sodann das Leistungsteil (2) in Abhängigkeit von den der Antriebssteuerung (5) vorgegebenen Soll-Ansteuerzuständen (*) unter Berücksichtigung ihrer neuen Parametrierung ansteuert.

5. Betriebsverfahren nach einem der obigen Ansprüche,
**dadurch gekennzeichnet,**
**dass** die Antriebssteuerung (5) von Zeit zu Zeit Betriebsdaten (BD) des elektrischen Antriebs (1) erfasst und über die Rechner-Rechner-Schnittstelle (10) in dem Datenpool (11) hinterlegt.

6. Steuerprogramm für eine Antriebssteuerung (5) zum Steuern eines elektrischen Antriebs (1), der ein Leistungsteil (2) und eine über das Leistungsteil (2) mit elektrischer Energie versorgte elektrische Maschine (3) umfasst, wobei das Steuerprogramm Maschinencode (9) umfasst, der von der Antriebssteuerung (5) abarbeitbar ist, wobei die Abarbeitung des Maschinencodes (9) durch die Antriebssteuerung (5) bewirkt, dass die Antriebssteuerung (5) ein Betriebsverfahren nach einem der obigen Ansprüche ausführt.

7. Antriebssteuerung für einen elektrischen Antrieb (1), der ein Leistungsteil (2) und eine über das Leistungsteil (2) mit elektrischer Energie versorgte elektrische Maschine (3) umfasst, wobei die Antriebssteuerung derart ausgebildet ist, dass sie im Betrieb ein Betriebsverfahren nach einem der Ansprüche 1 bis 5 ausführt, insbesondere mit einem Steuerprogramm (8) nach Anspruch 6 programmiert ist.

8. Elektrischer Antrieb,
- wobei der elektrische Antrieb ein Leistungsteil (2) und eine über das Leistungsteil (2) mit elektrischer Energie versorgte elektrische Maschine (3) umfasst,
- wobei der elektrische Antrieb von einer Antriebssteuerung (5) nach Anspruch 7 gesteuert wird.
